# EUROPÄISCHE PATENTANMELDUNG

(11) **EP 1 332 674 A1**
(43) Veröffentlichungstag der Anmeldung: **06.08.2003**
(21) Anmeldenummer: 02090047.8
(22) Anmeldetag: 05.02.2002
(51) Int. Cl.: A01N 25/28, A01M 17/00

(54) **Schädlingsbekämpfung mit mikroverkapseltem Klebstoff**

(71) Anmelder: Iwanek, Günter, 17268 Gross Fredenwalde (DE)
(72) Erfinder: Iwanek, Günter, 17268 Gross Fredenwalde (DE)

(57) **Zusammenfassung**

Eine Vorrichtung zur Bekämpfung von Schadinsekten und deren Larven besteht aus dem zweckdienlichen Fahrzeug mit den notwendigen Bauteilen für Energie, Steuerung, Wirkstoff, den Zuführungs-, Steuer- und Verbindungsleitungen sowie der Einrichtung zum Einsprühen der Pflanzen mittels Düsen oder der Einrichtung zum Einbringen der Wirkstoffe in Pflanzenstengel (17) mittels Druckdüsen, Druckpistolen oder Injektionsnadeln. Die Wirkstoffe (19,21) sind in Mikrokapseln (20) enthalten, die in einer Dispersion schwimmen oder in Mikronadeln (5) deponiert sind. Der aufgesprühte oder injizierte mikroverkapselte Klebstoff gelangt mit der Nahrung in die Freß/Verdauungsorgane der Schädlinge, die mechanisch oder chemisch geöffneten Mikrokapseln geben die Wirkstoffe (19,21) frei und durch Kontakt mit Wasser, Luft, Verdauungssekret der Schädlinge oder einer anteiligen Härterkomponente wird der Klebstoff aktiviert und macht die Freß/Verdauungsorgane funktionsuntüchtig.
Auch wenn Gift anstatt Klebstoff in verkapselter Form eingesetzt wird, liegt der Vorteil in der gezielten und sparsamen Wirkung des Giftes sowie in der geringen Schädigung anderer Insekten und der entsprechenden Nahrungskette.

## Beschreibung

Die Erfindung bezieht sich auf die Bekämpfung von Schadinsekten und deren Larven mit mikroverkapseltem Klebstoff im Ackerbau.

Schadinsekten und deren Larven werden bisher bekämpft durch Vergiftung ihres Lebensraumes, dadurch werden auch Nutzinsekten und Freßfeinde der Insekten geschädigt,jedoch versteckte Schädlinge wie etwa der Maiszünsler kaum erreicht.

Gegenstand der vorliegenden Erfindung ist eine Methode zur giftfreien Schädlingsvernichtung.
Es wird mikroverkapselter Klebstoff als Dispersion versprüht oder injiziert,der von den Schädlingen mit der Nahrung aufgenommen wird.Durch mechanische oder chemische Wirkung in den Freß-und/oder Verdauungsorganen werden die Mikrokapseln geöffnet und geben den Klebstoff frei,der aktiviert wird, und somit die Freß-und/oder Verdauungsorgene der Schädlinge funktionsuntüchtig macht.
Der Vorteil der Erfindung liegt in der giftfreien gezielten Schädlingsvernichtung,folglich im Umweltschutz,sowie der Erreichbarkeit versteckter Schädlinge mittels Injektionen in Pflanzenstengel.

Der Klebstoff kann als "Sekundenkleber" die Freßorgane verschließen oder langsamer wirkend die Freß-und/oder die Verdauungsorgane mittels verleimter Nahrung funktionsuntüchtig machen.
Der Klebstoff kann nach vorgegebener Stabilisierung in neutrale Rückstände zerfallen und unschädlich in der Nahrungskette bleiben.
Die Dispersion mit mikroverkapseltem Klebstoff kann neben der Versprühung nach dem Stand der Technik auch durch Injektion mittels Nadel oder Druckstrahl in die Pflanzenstengel gebracht werden,wozu ein geeignetes Fahrzeug die Instrumente an den Stengeln vorbeiführt und optische Sensoren jeweils den gezielten Schuß auslösen.

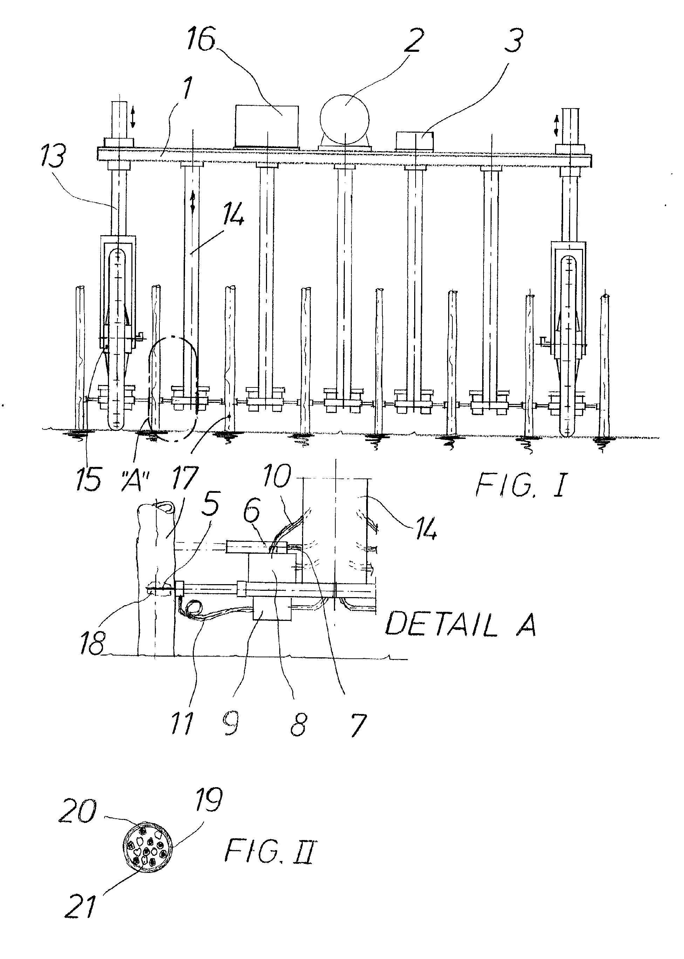

Im folgenden wird die Erfindung anhand eines Beispiels und mit Bezug auf die beiliegende Zeichnung näher erläutert,wobei Figur I eine erfindungsgemäße vollständige Vorrichtung zur Injektion der Dispersion (18) in Maisstengel (17) mitsamt dem zweckdienlichen Fahrzeug darstellt.
Figur I zeigt die Vorderansicht eines Fahrzeugs mit hochliegender Plattform (1) ,auf der ein Kompressor (2) zur Drucklufterzeugung für den Fahrantrieb (15) und die Pneumaticzylinder (4) mit gekoppelten Injektionsnadeln (5) steht.
Ferner ist eine speicherprogrammierte Steuerung (3) zugeordnet,die über optische Sensoren (6) und Magnetventile (8) die Pneumaticzylinder (4) sowie die Magnetventile (9) steuert. Leitungen für Druckluft (10) und Steuerstrom (7) werden durch vorhandene Halteprofile (13,14) zur Verbindung der speziellen Bauteile geführt.
Beim Passieren der Maisstengel (17) lösen optische Sensoren (6) über die SPS (3) und Magnetventile (8)die doppelt wirkenden Pneumaticzylinder (4) mit gekoppelten Injektionsnadeln (5) aus. Während des Rückzugs der Injektionsnadeln wird eine Portion Dispersion (18) mit mikroverkapseltem Klebstoff aus dem Druckbehälter (16) mit Dispersion über Druckleitungen (11) durch Magnetventile (9) freigegeben und mittels Injektionsnadeln (5) in die Maisstengel (17) gespritzt.
Durch die Nahrungsaufnahme der Schädlinge gelangen die Mikrokapseln (19,20,21 in Figur II) in deren Freß/Verdauungsorgane,werden durch Biß oder Verdauungssekret geöffnet,die Klebstoffbestandteile(20,21) frei und durch Kontakt mit Wasser oder Luft oder Härteranteile oder Verdauungssekret aktiviert zur Verklebung der Freß/Verdauungsorgane.

## Patentansprüche

1. Vorrichtung zur Bekämpfung von Schadinsekten und deren Larven,bestehend aus einem geeigneten Fahrzeug gemäß Figur I mit zweckdienlichen Bauteilen zum Versprühen,Einnebeln,Injizieren, Einblasen oder Einschießen von Dispersion (18) mit mikroverkapseltem Klebstoff auf,an oder in die Nutzpflanzen (17),die dann mit der Nutzpflanzennahrung in die Freß-/Verdauungsorgane der Schadinsekten gelangt,wo durch mechanische oder chemische Wirkung die Mikrokapseln geöffnet werden und den Klebstoff zur Verklebung der Freß-oder Verdauungsorgane von Schädlingen freigeben.

2. Mikroverkapselter Klebstoff gemäß Anspruch 1 , **dadurch gekennzeichnet,daß** Ein-oder Mehrkomponentenklebstoff (20 oder 21)in Mikroschalen (19) aus spezifischer Pflanzensubstanz, etwa aus Kartoffelkraut für Kartoffelschädlinge, oder aus biologisch abbaubarem oder sonstigem unschädlichem Material eingelagert ist und in einer Dispersion schwimmend auf oder in die Nutzpflanzen gebracht wird,wo der Wirkstoff mit der Nahrung in die Freß/Verdauungsorgane gelangt,dort durch Öffnung der Mikrokapseln aktiviert wird und die Freß/Verdauungsorgane funktionsuntüchtig macht.

3. Mikroverkapselter Klebstoff gemäß Anspruch 1 und 2,**dadurch gekennzeichnet,daß** der in Mikrokapseln eingeschlossene Klebstoff bei der Kapselöffnung durch Kontakt mit Wasser, Luft,einem anteiligen Härter oder Verdauungssekret der Schädlinge aktiviert wird und die Freß/Verdauungsorgane verklebt. Durch Bindung mit Wasser oder andere Komponenten während der Aktivierung kann die Wirkung eines "Sekundenklebers"erzielt werden.

4. Geeigneter Klebstoff nach Art des Leims der Baumschutzringe,der auf die potentiellen Ablegestellen für Schädlingseier oder die Kriechwege der Larven gesprüht wird.

5. Vorrichtung gemäß Anspruch 1 ,**dadurch gekennzeichnet,daß** spezielle oder handelsübliche Düsen zum Einsprühen,Einnebeln oder Einstäuben von Nutzpflanzen an einem geeigneten Versorgungsfahrzeug angebracht sind und von einem zeltartigen Schirm gegen Verwehungen überdeckt sind oder überdeckt sein können.

6. Vorrichtung gemäß Anspruch 1 ,**dadurch gekennzeichnet,daß** Injektionsnadeln mit Pneumaticzylindern oder entsprechenden zweckdienlichen Bauteilen gekoppelt sind und beim Passieren von Pflanzenstengeln über optische Sensoren, SPS und Ventile die Impulse zur Impfung der Pflanzenstengel erhalten,wobei während des Nadelrückzugs ein Ventil öffnet und jeweils eine Portion Dispersion durch die Nadel injiziert wird.

7. Vorrichtung gemäß Anspruch 1 ,**dadurch gekennzeichnet,daß** mikroverkapselter oder auch loser Klebstoff in Mikronadeln gelagert ist,wobei die Nadeln gebündelt von der Rolle zugeführt und vor dem Eindrücken oder Einschießen in die Pflanzenstengel aufgespreizt werden und in den Stengeln bei vorgegebener Zersetzung die Mikrokaseln/den Klebstoff freigeben.

8. Mikroverkapselter Wirkstoff gemäß Anspruch 1 , jedoch mit Insektizid anstatt Klebstoff,für gezielten und sparsamen Einsatz gegen Schadinsekten und deren Larven.Die fristgerechte Zersetzung der Giftstoffe in unschädliche Bestandteile ist vorzusehen.
